# FASCICULE DE BREVET EUROPEEN

(11) **EP 2 314 491 B1**
(45) Date de publication et mention de la délivrance du brevet: **04.07.2012**
(21) Numéro de dépôt: 10188356.9
(22) Date de dépôt: 21.10.2010
(51) Int. Cl.: B61B 12/06

(54) **Dispositif de surveillance de rotation d'un organe tournant d'appui et de guidage, dans une installation de remontée mécanique**
Vorrichtung zur Überwachung der Drehbewegung eines Drehorgans zum Abstützen und Lenken in einer Skilift-Anlage
Device for monitoring the rotation of a rotating support and guide member in a ski-lift facility

(30) Priorité: 23.10.2009 FR 0957454
(43) Date de publication de la demande: 27.04.2011
(73) Titulaire: Gimar Montaz Mautino, 38130 Echirolles (FR)
(72) Inventeur: Lagoutte, Rémy, 38450 Vif (FR); Billon-Tyrard, Guy, 38430 Moirans (FR); Messina, Gérard, 38360 Sassenage (FR)
(74) Mandataire: Chevalier, Renaud Philippe

(56) Documents cités:
- EP-A1- 1 953 062
- CH-A5- 683 414
- FR-A1- 2 919 841
- US-A- 5 581 180

## Description

La présente invention concerne, d'une manière générale, les installations de remontée mécanique à câble comportant des trains de galets, l'expression « remontée mécanique » désignant ici tous les systèmes de transport dits téléportés tels que télésièges, télécabines et téléphériques, ainsi que les téléskis. Plus particulièrement, cette invention s'intéresse à un dispositif de surveillance de la rotation d'un organe tournant tel que galet ou poulie, appartenant à un train de galets d'une telle installation.

De manière généralement connue, une installation de remontée mécanique à câble comporte au moins un câble sans fin, qui passe autour d'une poulie motrice et autour d'une poulie de renvoi situées respectivement aux deux extrémités de l'installation, et des véhicules ou nacelles attachés de manière fixe ou débrayable sur le câble sans fin. Entre la poulie motrice et la poulie de renvoi, ce câble est guidé et soutenu par des trains de galets qui sont portés eux-mêmes par des pylônes, ou éventuellement situés dans les gares de départ ou d'arrivée. Ces trains de galets comprennent chacun une pluralité de galets ou poulies disposés en ligne et pouvant être montés sur un même support désigné comme « balancier », ledit balancier étant monté pivotant sur un axe horizontal au sommet d'un pylône.

Les installations de remontée mécanique, en particulier celles destinées au transport de personnes, sont soumises à des exigences de sécurité nécessitant la présence de dispositifs de sécurité adaptés, qui doivent non seulement être capables de détecter des anomalies, mais encore être capables d'arrêter l'installation en cas de détection d'une anomalie présentant un danger, par exemple en cas de déraillement du câble.

En particulier, dans le cas où un galet d'un train de galets est bloqué ou anormalement freiné, en raison d'un problème mécanique ou à cause du gel ou de la présence de neige ou pour toute autre raison, il existe un fort risque de déraillement du câble, notamment si le galet bloqué se trouve en entrée du train de galets. Il est donc très souhaitable, voire exigé par les autorités de contrôle ou par les textes règlementaires, de pouvoir détecter qu'un galet est bloqué, surtout en entrée de train de galets, donc de discriminer un galet tournant normalement d'un galet bloqué.

Les installations existantes de remontées mécaniques sont, pour la plupart d'entre elles, équipées d'un dispositif de sécurité par ligne électrique bifilaire, avec des interrupteurs situés sur les balanciers et des résistances pour une éventuelle localisation des défauts. Un tel circuit électrique ne permet pas d'amener une source électrique aux pylônes, pour l'alimentation de dispositifs dédiés spécifiquement à la surveillance de la rotation ou du blocage des galets.

On pourrait imaginer d'alimenter électriquement au moyen de batteries les dispositifs de surveillance de rotation de galets, mais cette solution reste le plus souvent inadaptée.

Premièrement il convient de pouvoir charger les batteries ou de les remplacer, ce qui pose déjà une difficulté pratique pour des batteries placées en hauteur sur des pylônes.

De plus, pour des installations de remontées mécaniques situées généralement en altitude dans des régions montagneuses, les conditions climatiques hivernales, avec des températures très basses notamment la nuit (pouvant atteindre -20°C ou même -30°C), rendent encore plus difficile l'utilisation de batteries qui dans de telles conditions se déchargent rapidement, ne permettent pas d'emmagasiner suffisamment d'énergie et ont une durée de vie très faible.

Or il convient que tout dispositif de sécurité soit pleinement opérationnel pratiquement dès la mise en marche de l'installation de remontée mécanique, généralement le matin, pour une détection quasi immédiate d'un galet bloqué.

La demande de brevet européen EP 1953062 A1 décrit déjà un dispositif de surveillance de rotation d'un galet appartenant à un train de galets, dans une installation de remontée mécanique, le dispositif de ce document appliquant un principe de comparaison de grandeurs liées aux mouvements respectifs de deux galets, et en particulier une comparaison des vitesses de rotation de deux galets. Ainsi, en cas d'écart important entre les vitesses de rotation de deux galets appartenant à un même train de galets, il existe un fort soupçon de blocage de l'un des galets. Dans ce cas, un signal d'alarme est émis et de préférence l'installation de remontée mécanique est automatiquement arrêtée ou du moins mise en vitesse réduite.

Cependant, le document EP 1953062 A1 n'indique aucun moyen concret pour l'alimentation électrique du dispositif de surveillance concerné, qu'il s'agisse des capteurs de détection de la rotation des galets ou des éléments traitant les signaux issus de ces capteurs. Ce document n'apporte donc aucune solution aux problèmes précédemment exposés.

On connaît aussi, par la demande de brevet français FR 2919841 A1, un dispositif de surveillance qui consiste essentiellement en un élément électriquement conducteur placé devant le premier galet d'un train de galets et relié électriquement à la ligne de sécurité de l'installation de remontée mécanique. Lorsque le galet est bloqué, le câble provoque l'usure progressive d'un bandage du galet, si bien que le câble ou l'attache d'un véhicule suspendu à ce câble descend et vient toucher l'élément électriquement conducteur pour provoquer un court-circuit et arrêter l'installation. Une telle solution supprime toute alimentation électrique. Cependant, entre le moment où le galet se bloque et le moment où l'installation est arrêtée, il se passe un temps important, pouvant être de l'ordre de plusieurs minutes. De plus, le dispositif détecte une conséquence probable mais non certaine du blocage d'un galet, mais il ne détecte pas directement le fait qu'un galet soit bloqué ou fortement freiné, de sorte que sa fiabilité est limitée.

Face à cet état de la technique, la présente invention a pour but de fournir un dispositif de surveillance de rotation d'un organe tournant d'appui et de guidage, tel que précédemment précisé, qui détecte directement la rotation ou la non-rotation d'un tel organe tournant et qui bénéficie d'un système d'alimentation électrique autonome, autre que batterie, utilisable à des températures très basses et rendant le dispositif immédiatement opérationnel à la mise en marche de l'installation de remontée mécanique.

A cet effet, l'invention a essentiellement pour objet une installation de remontée mécanique à câble comportant un organe tournant d'appui et de guidage, tel que galet ou poulie, appartenant à un train de galets, l'installation comportant un dispositif de surveillance de rotation de l'organe tournant, le dispositif réalisant une comparaison de grandeurs liées aux mouvements d'au moins deux organes tournants, en particulier une comparaison des vitesses de rotation de deux organes tournants, en vue de l'émission d'une alarme et/ou de la mise à l'arrêt de l'installation de remontée mécanique en cas d'écart significatif entre les vitesses de rotation des deux organes tournants ; cette installation étant caractérisée par le fait que le dispositif de surveillance comporte des moyens de génération d'un courant électrique à partir de la rotation d'au moins un organe tournant, au moins un condensateur chargé par le courant électrique ainsi généré, et des moyens de comparaison des vitesses de rotation des organes tournants, moyens qui sont aptes à être alimentés électriquement à partir du condensateur précité.

Ainsi, l'invention propose un dispositif de surveillance qui est autonome en énergie, et qui fait appel à un ou plusieurs condensateurs, préférés ici à des batteries pour un fonctionnement à de très basses températures. La génération de courant électrique par la rotation des organes tournants tels que galets, notamment à l'aide de moyens électromagnétiques connus en soi, permet de créer une réserve d'énergie nécessaire à la consommation propre du dispositif, et simultanément de mesurer ou comparer les vitesses de rotation des galets en constituant un capteur de mesure approprié.

Le dispositif de l'invention est opérationnel en un temps très court : le courant électrique généré sert dans un premier temps à charger le ou les condensateurs, mais ce temps est en pratique très court, de l'ordre de dix secondes, et il correspond sensiblement au temps nécessaire à l'installation de remontée mécanique pour atteindre sa vitesse nominale. Dès que le condensateur est chargé, le dispositif est capable de comparer les vitesses de rotation de deux galets, notamment en analysant une différence de tension électrique, et de commander si nécessaire l'arrêt de l'installation. Entre le moment où un galet se bloque, et le moment où l'installation est arrêtée, il se passe au maximum 5 secondes pour une installation dont la vitesse est de 2,3 m/s.

Le dispositif permet ainsi de détecter la non-rotation d'un galet « à la source » et non en observant les conséquences du blocage d'un galet sur le comportement de l'installation de remontée mécanique. Le délai de détection d'un galet bloqué est donc quasi-immédiat, et ce galet peut même être détecté avant qu'il soit totalement bloqué, c'est-à-dire dès que le galet concerné commence à se gripper et à ralentir. La mise en oeuvre de moyens électromagnétiques évite aussi tous frottements perturbateurs dans le fonctionnement du dispositif.

En raison de son caractère autonome, le dispositif de surveillance de rotation d'un organe tournant, objet de l'invention peut être aisément inséré sur des installations de remontées mécaniques existantes qui pour la plupart sont dépourvues d'alimentation électrique sur les pylônes. Bien entendu, le même dispositif peut aussi équiper des installations neuves, qui bénéficieront alors de tous les avantages procurés par ce dispositif.

Dans une forme de réalisation préférée d'une telle installation avec ce dispositif de surveillance de la rotation d'un organe tournant d'appui et de guidage, il est prévu, pour deux organes tournants comprenant de préférence un organe tournant d'entrée, des aimants permanents portés par ces deux organes tournants et disposés en vis-à-vis de bobines électromagnétiques montées sur un support fixe, des moyens de captation du courant électrique généré dans au moins une bobine et de charge d'au moins un condensateur par ce courant électrique, et des moyens de comparaison, alimentés électriquement à partir du condensateur, qui déterminent et analysent une différence de fréquence ou de tension électrique à partir du courant généré dans au moins une bobine par la rotation d'un organe tournant et du courant généré dans au moins une autre bobine par la rotation de l'autre organe tournant.

Une telle réalisation simple et économique, permet de vérifier que le galet d'entrée d'un train de galets tourne normalement, les bobines jouant simultanément le rôle de capteur de vitesse et le rôle de générateur de courant, en combinaison avec les aimants portés par les galets.

L'invention sera mieux comprise à l'aide de la description qui suit, en référence au dessin schématique annexé représentant, à titre d'exemple, une forme d'exécution de ce dispositif de surveillance de rotation d'un organe tournant d'appui et de guidage, dans une installation de remontée mécanique :
Figure 1 est une vue en perspective d'un train de galets d'une installation de remontée mécanique, le train de galets étant équipé du dispositif objet de l'invention ;
Figure 2 est une vue schématique montrant deux galets de ce train de galets et, sous forme de schéma électrique simplifié, le dispositif de surveillance de rotation associé à ces deux galets.

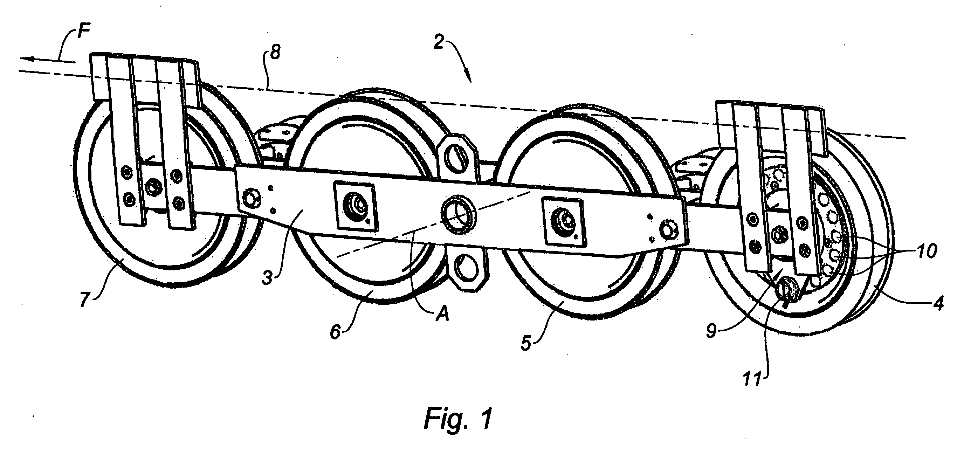

En se référant à la figure 1, un train de galets désigné dans son ensemble par la référence 2 comporte un châssis 3, monté pivotant autour d'un axe horizontal A sur un pylône (non représenté) d'une installation de remontée mécanique. Sur le châssis 3 sont montés tournants plusieurs galets, par exemple quatre galets 4, 5, 6 et 7, disposés en ligne, sur lesquels passe un câble 8 de l'installation de remontée mécanique, le câble 8 pouvant supporter des « véhicules » tels que sièges ou cabines. Le câble 8 se déplaçant dans le sens de la flèche F, lors du fonctionnement de l'installation, on distingue ici le galet d'entrée 4 qui est le premier galet rencontré par le câble dans son avance.

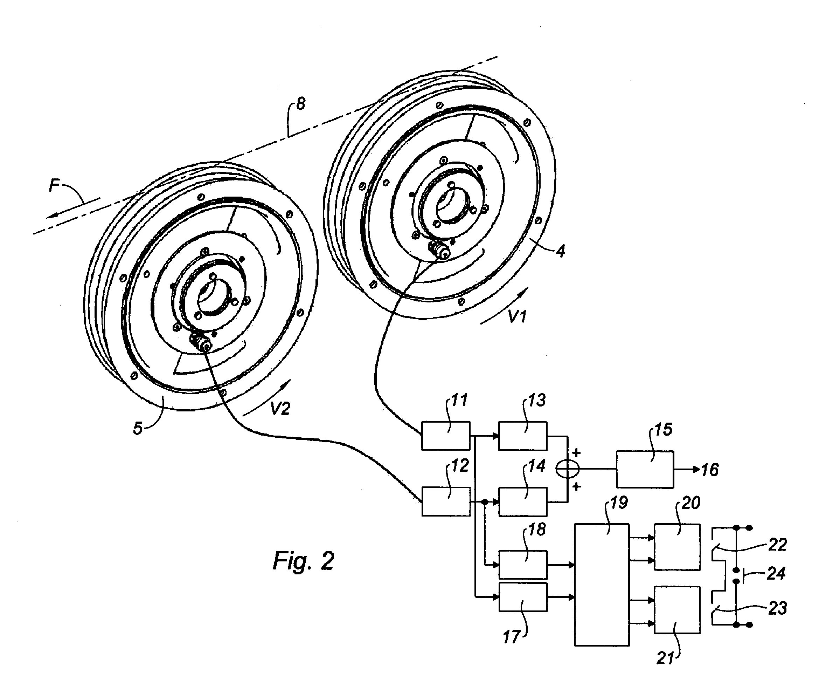

En se référant aussi à la figure 2, un dispositif désigné globalement par la référence 9 est associé au galet d'entrée 4 et au galet immédiatement suivant 5, pour surveiller la rotation de ces galets et en particulier la rotation du galet d'entrée 4, en vue de détecter un éventuel blocage de ce galet 4.

Le galet d'entrée 4 porte une série d'aimants permanents 10 disposés uniformément près de sa périphérie, les aimants 10 étant en nombre pair, par exemple au nombre de vingt-quatre, et présentant alternativement des polarités « Nord » et « Sud » sur une face du galet 4.

En vis-à-vis des aimants 10 du galet d'entrée 4, est prévue une bobine électromagnétique 11 fixée sur le châssis 3 du train de galets 2.

D'une manière similaire, le galet immédiatement suivant 5 porte une série d'aimants permanents, qui se déplacent devant une autre bobine électromagnétique 12 elle aussi fixée sur le châssis 3 du balancier 2.

Les deux bobines électromagnétiques 11 et 12 sont reliées respectivement à deux ponts redresseurs 13 et 14, lesquels alimentent électriquement, et chargent ainsi, un condensateur 15 servant de réserve d'énergie alimentant les autres circuits du dispositif 9, l'alimentation électrique ainsi réalisée étant symbolisée en 16.

Les deux bobines électromagnétiques 11 et 12 sont aussi reliées, par l'intermédiaire d'étages électroniques d'adaptation ou de mise en forme respectifs 17 et 18, à un microprocesseur 19. La fonction principale du microprocesseur 19 consiste à comparer les tensions ou les fréquences issues des deux bobines 11 et 12, afin de générer un signal dans le cas d'un écart relatif supérieur par exemple à 80% ou 90% entre les deux grandeurs comparées, lesquelles sont représentatives respectivement des vitesses de rotation V1 et V2 des deux galets 4 et 5 considérés.

Ainsi, dans le cas d'un écart relatif des vitesses V1 et V2 supérieur à un certain seuil, ce qui caractérise le blocage d'un galet tel que le galet d'entrée 4, le microprocesseur 19 commande deux relais bistables 20 et 21, qui ouvrent des contacts respectifs 22 et 23 intercalés sur la ligne de sécurité de l'installation de remontée mécanique. Ceci provoque l'émission d'une alarme et la mise à l'arrêt de l'installation.

Un bouton-poussoir 24, monté en parallèle avec les contacts 22 et 23, est utilisable pour commander manuellement le redémarrage de l'installation, par du personnel qualifié intervenant sur le pylône qui porte le train de galets 2 en défaut. Le bouton-poussoir 24 est remplaçable par tout autre type de bouton ou par une clé spéciale, et plus généralement par tout organe manuel permettant de ramener les relais 20 et 21 dans leur position initiale.

Si l'on considère que le galet surveillé est le galet d'entrée 4, il va de soi que la comparaison de la vitesse de ce galet peut être faite avec un galet de référence qui serait autre que le galet 5 immédiatement suivant, sans s'écarter pour autant du principe de l'invention. Le dispositif peut aussi être étendu à la comparaison des vitesses de plus de deux galets, en particulier à l'ensemble des galets appartenant à un même train de galets, pour surveiller la rotation de l'ensemble des galets de ce train de galets. De plus, en équipant les deux galets d'entrée de deux trains de galets opposés d'un pylône, respectivement situés côté « montée » et côté « descente », le dispositif permet non seulement de surveiller un éventuel blocage de galet, mais il permet aussi de surveiller la position du câble et il devient ainsi un détecteur de déraillement du câble sur l'un ou l'autre des deux trains de galets. Le dispositif de l'invention peut détecter aussi la perte d'un galet, le dispositif étant capable de détecter l'absence d'un galet par exemple tombé au sol la suite de la rupture de son axe.

On ne s'éloignerait pas de cadre de l'invention, telle que définie dans les revendications annexées :
- En modifiant le nombre des aimants et des bobines associés à chaque galet ;
- En remplaçant les galets par des poulies ou par des roues ou par tout autre organe analogue d'appui et de guidage, coopérant avec un câble;
- En prévoyant des condensateurs plus ou moins nombreux, chargés à partir d'une ou plusieurs bobines, associées à un seul galet ou à plusieurs galets ;
- En destinant le dispositif à des installations de remontées mécaniques à câble de tous types : télésièges, télécabines, téléphériques, téléskis, etc. ;
- En étendant la notion de train de galets à tout ensemble de galets ou de poulies, par exemple en comparant les vitesses d'une poulie côté montée et d'une poulie correspondante côté descente sur un pylône de téléski, la présence de deux ou plusieurs organes tournants de chaque côté n'étant pas nécessaire ;
- En appliquant l'invention non pas à des galets « fixes », mais à des galets « mobiles » appartenant par exemple à un chariot de téléphérique roulant sur un ou des câbles porteurs.

## Revendications

1. Installation de remontée mécanique à câble comportant un organe tournant d'appui et de guidage, tel que galet ou poulie, appartenant à un train de galets (2), l'installation comportant un dispositif (9) de surveillance de rotation de l'organe tournant, le dispositif réalisant une comparaison de grandeurs liées aux mouvements d'au moins deux organes tournants (4, 5), en particulier une comparaison des vitesses de rotation (V1, V2) de deux organes tournants (4, 5), en vue de l'émission d'une alarme et/ou de la mise à l'arrêt de l'installation de remontée mécanique en cas d'écart significatif entre les vitesses de rotation (V1, V2) des deux organes tournants (4, 5), **caractérisé en ce que** le dispositif de surveillance (9) comporte des moyens de génération (10, 11, 12) d'un courant électrique à partir de la rotation d'au moins un organe tournant (4, 5), au moins un condensateur (15) chargé par le courant électrique ainsi généré, et des moyens de comparaison (19) des vitesses de rotation (V1, V2) des organes tournants (4, 5), moyens qui sont aptes à être alimentés électriquement à partir du condensateur (15) précité.

2. Installation de remontée mécanique selon la revendication 1, **caractérisée en ce qu'**il est prévu, pour deux organes tournants (4, 5) comprenant de préférence un organe tournant d'entrée (4), des aimants permanents (10) portés par ces deux organes tournants (4, 5) et disposés en vis-à-vis de bobines électromagnétiques (11, 12) montées sur un support fixe (3), des moyens de captation (13, 14) du courant électrique généré dans au moins une bobine (11, 12) et de charge d'au moins un condensateur (15) par ce courant électrique, et des moyens de comparaison (19), alimentés électriquement à partir du condensateur (15), qui déterminent et analysent une différence de fréquence ou de tension électrique à partir du courant généré dans au moins une bobine (11) par la rotation d'un organe tournant (4) et du courant généré dans au moins une autre bobine (12) par la rotation de l'autre organe tournant (5).

## Claims

1. A cable ski-lift facility, including a supporting and guiding rotating member, such as a roller or pulley, belonging to a roller assembly (2), the facility including a device (9) for monitoring the rotation of the rotating member, the device making a comparison of quantities related to the movements of at least two rotating members (4, 5), in particular a comparison of the speeds of rotation (V1, V2) of two rotating members (4, 5), with view to emitting an alarm and/or stopping the ski-lift facility in the case of a significant difference between the speeds of rotation (V1, V2) of both rotating members (4, 5), **characterized in that** the monitoring device (9) includes means (10, 11, 12) for generating an electric current from the rotation of at least one rotating member (4, 5), at least one capacitor (15) charged by the thereby generated electric current, and means (19) for comparing the speeds of rotation (V1, V2) of the rotating members (4, 5), means which are capable of being electrically powered from the aforementioned capacitor (15).

2. The ski-lift facility according to claim 1, **characterized in that**, for two rotating members (4, 5) preferably comprising an inlet rotating member (4), provision is made for permanent magnets (10) borne by both of these rotating members (4, 5) and positioned facing electromagnetic coils (11, 12) mounted on a fixed support (3), means (13, 14) for sensing the generated electric current in at least one coil (11, 12) and for charging at least one capacitor (15) with this electric current, and comparison means (19), electrically powered from the capacitor (15), which determine and analyze a frequency or electric voltage difference from the current generated in at least one coil (11) by the rotation of a rotating member (4) and from the current generated in at least one other coil (12) by the rotation of the other rotating member (5).

## Patentansprüche

1. Mechanische Skilift-Anlage mit Kabel, die ein Drehorgan zum Abstützen und Lenken, wie eine Rolle oder Scheibe, aufweist, das zu einer Rollenbatterie (2) gehört, wobei die Anlage eine Überwachungsvorrichtung (9) der Rotation des Drehorgans aufweist, wobei die Vorrichtung einen Vergleich der Größen durchführt, die mit den Bewegungen von mindestens zwei Drehorganen (4, 5) verbunden sind, insbesondere einen Vergleich der Rotationsgeschwindigkeiten (V1, V2) von zwei Drehorganen (4, 5) zum Zweck der Ausgabe einer Alarmmeldung und/oder des Anhaltens der mechanischen Skilift-Anlage bei einer signifikanten Differenz zwischen den Rotationsgeschwindigkeiten (V1, V2) der zwei Drehorgane (4, 5), **dadurch gekennzeichnet, dass** die Überwachungsvorrichtung (9) Mittel zur Erzeugung (10, 11, 12) eines elektrischen Stroms ausgehend von der Rotation mindestens eines Drehorgans (4, 5), mindestens einen Kondensator (15), der mit dem derart erzeugten Strom geladen wird, und Vergleichsmittel (19) der Rotationsgeschwindigkeiten (V1, V2) der Drehorgane (4, 5) aufweist, Mittel, die imstande sind, von den vorgenannten Kondensator (15) elektrisch versorgt zu werden.

2. Mechanische Skilift-Anlage nach Anspruch 1, **dadurch gekennzeichnet, dass** für zwei Drehorgane (4, 5), die vorzugsweise ein Eingangsdrehorgan (4) umfassen, Dauermagneten (10), die von diesen zwei Drehorganen (4, 5) getragen werden und gegenüber von elektromagnetischen Spulen (11, 12) angeordnet sind, die an einem starren Halter (3) befestigt sind, Mittel zur Aufnahme (13, 14) des elektrischen Stroms, der in mindestens einer Spule (11, 12) erzeugt wird und zum Laden mindestens eines Kondensators (15) mit diesem elektrischen Strom und Vergleichsmittel (19) vorgesehen sind, die elektrisch vom Kondensator (15) versorgt werden, die ausgehend von dem in mindestens einer Spule (11) durch die Rotation eines Drehorgans (4) erzeugten Stroms und des in mindestens einer anderen Spule (12) durch die Rotation des anderen Drehorgans (5) erzeugten Stroms eine Differenz der Frequenz oder der elektrischen Spannung bestimmen und analysieren.
